# EUROPEAN PATENT SPECIFICATION

(11) **EP 2 480 038 B1**
(45) Date of publication and mention of the grant of the patent: **17.08.2016**
(21) Application number: 11010222.5
(22) Date of filing: 27.12.2011
(51) Int. Cl.: H04W 52/02, H04W 74/06

(54) **Method and system for medium access with reduced power consumption for constrained wireless devices**
Verfahren und System für einen Medienzugang mit reduziertem Leistungsverbrauch für eingeschränkte drahtlose Vorrichtungen
Procédé et système d'accès de support avec consommation d'alimentation réduite pour dispositifs restreints sans fil

(30) Priority: 19.01.2011 US 201161434058 P; 04.03.2011 US 201113040598
(43) Date of publication of application: 25.07.2012
(73) Proprietor: Broadcom Corporation, Irvine, CA 92617 (US)
(72) Inventor: Ptasinki, Henry, Irvine, CA 92617 (US); Moorti, Tushar, 94041 Mountain View, CA (US)
(74) Representative: Jehle, Volker Armin

(56) References cited:
- US-A- 5 440 560
- US-A1- 2004 190 467
- US-A1- 2008 062 939

## Description

Certain embodiments of the invention relate to networking. More specifically, certain embodiments of the invention relate to a method and system for medium access with reduced power consumption for constrained wireless devices.

### BACKGROUND OF THE INVENTION

Communications networks are becoming an increasingly popular means of exchanging data of various types and sizes for a variety of applications. Much of the demand for network connectivity is driven by a shift to electronic lifestyles involving desktop computers, laptop computers, and various handheld devices such as smart phones, personal media players, and personal gaming systems. As an increasing number of portable and/or handheld devices are enabled for network communications, battery life has become a major concern of consumers and, consequently, a major factor in electronic devices purchasing decisions. Accordingly, ways of reducing power consumption in networked devices are needed.

Further limitations and disadvantages of conventional and traditional approaches will become apparent to one of skill in the art, through comparison of such systems with some aspects of the present invention as set forth in the remainder of the present application with reference to the drawings.

US2008/062939 discloses a wireless device that makes reservation of wireless medium to allow another device to perform communication in scheduled access periods, with a lower transmission power. The power consumption of the another device is further reduced by switching it of when there is no data scheduled. Receiver sensitivity of all the devices stays identical during the whole scheduling procedure.

### BRIEF SUMMARY OF THE INVENTION

The invention is implemented in method claims 1 and 7 and system claims 12 and 15.

A system and/or method is provided for medium access with reduced power consumption for constrained wireless devices, substantially as illustrated by and/or described in connection with at least one of the figures, as set forth more completely in the claims.

According to an aspect, a method is provided, comprising:
in a first wireless communication device:
   communicating with one or more other wireless communication devices to schedule access to a medium shared by said first wireless communication device and said one or more other wireless communication devices;
   after one or more medium access periods are scheduled for said first wireless communication device, transmitting data onto said medium upon receiving, during one of said one or more medium access periods scheduled for said first wireless communication device, a medium reservation message designating said first wireless communication device.

Advantageously, the method further comprises:
configuring one or more portions of said first wireless communication device to operate in a first mode of operation during medium access periods scheduled for said first wireless communication device; and
configuring said one or more portions of said first wireless communication device to operate in a power-saving mode of operation at times other than said medium access periods scheduled for said first wireless communication device.

Advantageously, the method further comprises:
when said first wireless communication device has data to transmit, configuring one or more portions of said first wireless communication device to operate in a first mode of operation during medium access periods scheduled for said first wireless communication device; and
when said first wireless communication device does not have data to transmit, configuring said one or more portions of said first wireless communication device to operate in a power-saving mode of operation during said medium access periods scheduled for said first wireless communication device.

Advantageously:
a receiver of said first wireless communication device is configured into a higher-sensitivity mode of operation prior to and during said communicating with said one or more other wireless communication devices to schedule access to said medium; and
said receiver of said first wireless communication device is configured into a lower-sensitivity mode of operation subsequent to said scheduling.

Advantageously, the method further comprises:
scheduling a first medium access period for said first wireless communication device during said communicating; and
scheduling a subsequent medium access period for said first wireless communication device while communicating with one of said other wireless communication devices during said first medium access period.

According to a further aspect, a method is provided, comprising:
in a first wireless communication device:
   communicating with one or more other wireless communication devices to schedule access to a medium shared by said first wireless communication device and said one or more other wireless communication devices;
   contending for access to said medium at, or just prior to, a beginning of a medium access period scheduled for one of said other wireless communication devices; and
   during said medium access period, after gaining access to said medium, transmitting a medium reservation message designating said one of said other wireless communication devices.

Advantageously, said medium reservation message is sent without receiving a medium reservation message from said one or more other wireless communication devices.

Advantageously, the method further comprises:
one or both of:
   cancelling one or more future medium access periods scheduled for one of said other wireless communication devices, and
   reducing a duration of one or more future medium access periods scheduled for said one of said other wireless communication devices,
when no communications from said one of said other wireless communication devices have been received during one or more past and/or current medium access periods scheduled for said one of said other wireless communication devices.

Advantageously, said one or more other communication devices comprise at least one access point.

Advantageously, the method further comprises:
scheduling a first medium access period for one of said other wireless communication devices during said communicating; and
scheduling a subsequent medium access period for said one of said other wireless communication devices while communicating with said one of said other wireless communication devices during said first medium access period.

According to a further aspect, a system is provided, comprising:
one or more circuits for use in a first wireless communication device, said one or more circuits being operable to:
   communicate with one or more other wireless communication devices to schedule access to a medium that is shared by said first wireless communication device and said one or more other wireless communication devices;
   after one or more medium access periods are scheduled for said first wireless communication device, transmit data onto said medium upon receiving, during one of said one or more medium access periods scheduled for said first wireless communication device, a medium reservation message designating said first wireless communication device.

Advantageously, said one or more circuits are operable to:
configure one or more portions of said first wireless communication device to operate in a first mode of operation during medium access periods scheduled for said first wireless communication device; and
configure said one or more portions of said first wireless communication device to operate in a power-saving mode of operation at times other than said medium access periods scheduled for said first wireless communication device.

Advantageously, said one or more circuits are operable to:
when said first wireless communication device has data to transmit, configure one or more portions of said first wireless communication device to operate in a first mode of operation during medium access periods scheduled for said first wireless communication device; and
when said first wireless communication device does not have data to transmit, configure said one or more portions of said first wireless communication device to operate in a power-saving mode of operation during said medium access periods scheduled for said first wireless communication device.

Advantageously:
said one or more circuits comprise a receiver;
said receiver is configured into higher-sensitivity mode of operation prior to and during said communicating with said one or more other wireless communication devices to schedule access to said medium; and
said receiver is configured into a lower-sensitivity mode of operation subsequent to said scheduling.

Advantageously, said one or more circuits are operable to:
schedule a first medium access period for said first wireless communication device during said communicating; and
schedule a subsequent medium access period for said first wireless communication device while communicating with one of said other wireless communication devices during said first medium access period.

According to a further aspect, a system is provided, comprising:
one or more circuits for use in a first wireless communication device:
   communicate with one or more other wireless communication devices to schedule access to a medium that is shared by said first wireless communication device and said one or more other wireless communication devices;
   contend for access to said medium at, or just prior to, a beginning of a medium access period scheduled for one of said other wireless communication devices; and
   during said medium access period, after gaining access to said medium, transmit a medium reservation message designating said one of said other wireless communication devices.

Advantageously, said medium reservation message is sent without receiving a medium reservation message from said one or more other wireless communication devices.

Advantageously, said one or more circuits are operable to one or both of:
cancel of one or more future medium access periods scheduled for one of said other wireless communication devices, and
reduce of a duration of one or more future medium access periods scheduled for said one of said other wireless communication devices,
when no communications from said one of said other wireless communication devices have been received during one or more past and/or current medium access periods scheduled for said one of said other wireless communication devices.

Advantageously, said one or more other communication devices comprise at least one access point.

Advantageously, said one or more circuits are operable to:
schedule a first medium access period for one of said other wireless communication devices during said communicating; and
schedule a subsequent medium access period for said one of said other wireless communication devices while communicating with said one of said other wireless communication devices during said first medium access period.

These and other advantages, aspects and novel features of the present invention, as well as details of an illustrated embodiment thereof, will be more fully understood from the following description and drawings.

### BRIEF DESCRIPTION OF THE DRAWINGS

FIG. 1A is diagram illustrating an exemplary wireless network, in accordance with an embodiment of the invention.
FIG. 1B is block diagram illustrating exemplary wireless devices, in accordance with an embodiment of the invention.
FIGs. 2A and 2B are flow charts illustrating exemplary steps for managing medium access and power consumption of a constrained wireless device, in accordance with an embodiment of the invention.
FIGs. 3A and 3B are flow charts illustrating exemplary steps for managing medium access and power consumption of a constrained wireless device that supports one or more power saving modes of operation, in accordance with an embodiment of the invention.
FIG. 4 is a flow chart illustrating exemplary steps for managing medium access and power consumption, in accordance with an embodiment of the invention.

### DETAILED DESCRIPTION OF THE INVENTION

Certain embodiments of the invention may be found in a method and system for medium access and power consumption for constrained wireless devices. In various embodiments of the invention, a first wireless communication device may be operable to communicate with one or more other wireless communication devices to schedule access to a medium that is shared by the first wireless communication device and the one or more other wireless communication devices. After one or more medium access periods are scheduled for the first wireless communication device, the first wireless communication device may refrain from transmitting data, or reduce or limit transmissions of data, onto the medium until a medium reservation message which designates the first wireless communication device is received by the first wireless communication device during the one or more medium access periods scheduled for the first wireless communication device. The first wireless communication device may then transmit the data onto the medium upon receiving, during the medium access periods scheduled for the first wireless communication device, a medium reservation message designating the first wireless communication device. One or more portions of the first wireless communication device may be configured to operate in a first mode of operation during medium access periods scheduled for the first wireless communication device, and configured to operate in a power-saving mode of operation at times other than the medium access periods scheduled for the first wireless communication device. When the first wireless communication device has data to transmit, one or more portions of the first wireless communication device may be configured to operate in a first mode of operation during medium access periods scheduled for the first wireless communication device. When the first wireless communication device does not have data to transmit, one or more portions of the first wireless communication device may be configured to operate in a power-saving mode of operation during the medium access periods scheduled for the first wireless communication device. A receiver of the first wireless communication device may be configured into a higher-sensitivity mode of operation prior to and during initial scheduling of one or more medium access periods, and configured into a lower-sensitivity mode of operation subsequent to initial scheduling. A first medium access period for the first wireless communication device may be scheduled during initial communications between the first wireless communication device and the one or more other wireless communication devices. A future medium access period for the first wireless communication device may be scheduled during a current medium access period.

In various embodiments of the invention, a first wireless communication device may communicate with one or more other wireless communication devices to schedule access to a medium that is shared by the first wireless communication device and the one or more other wireless communication devices. The first wireless communication device may contend for access to the medium at, or just prior to, a beginning of a medium access period scheduled for a particular one of the other wireless communication devices. During the medium access period for the particular wireless communication devices, after gaining access to the medium, the first wireless communication device may transmit a medium reservation message designating the particular wireless communication device. The medium reservation message may be sent without receiving a medium reservation message from the particular wireless communication device. The first wireless communication device may cancel one or more future medium access periods scheduled for the particular wireless communication device when no communication from the particular wireless communication device has been received during one or more past and/or current medium access periods scheduled for the particular wireless communication device. The first wireless communication device may reduce a duration of one or more future medium access periods scheduled for the particular wireless communication device when no communications from the particular wireless communication device has been received during one or more past and/or current medium access periods scheduled for the particular wireless communication device. The one or more other communication devices may comprise at least one access point. A first medium access period for a particular one of the other wireless communication devices may be scheduled during initial communications between that wireless communication device and the first wireless communication device. A subsequent medium access period for the particular wireless communication device may be scheduled while the particular wireless communication device is communicating with the first wireless communication device during the first medium access period.

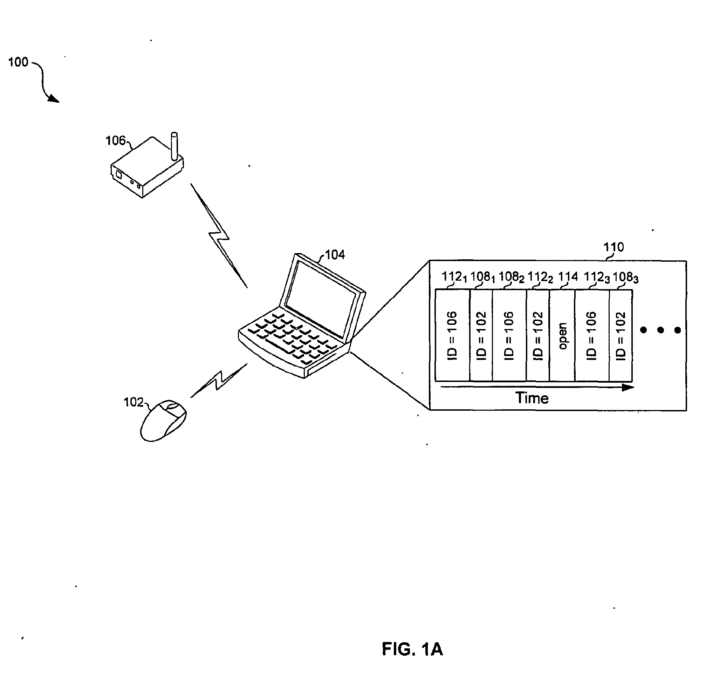

FIG. 1A is diagram illustrating an exemplary wireless network, in accordance with an embodiment of the invention. Referring to FIG. 1A, there is shown a wireless network 100 comprising wireless communication devices 102, 104, and 106 and an inset 110 depicting a plurality of medium access periods 108, 112, and 114.

The wireless communication device 102 may comprise a constrained device, where "constrained" refers to the fact that the device 102 may have limited resources of some form. For example, the device 102 may run on battery power and may thus be constrained in terms of power consumption. The wireless communication device 102 may comprise suitable logic, circuitry, interfaces, and/or code for implementing functions of a wireless communication device and for implementing various aspects of the present invention. The wireless communication device 102 may support any of one or more wireless protocols such as the IEEE 802.11 family of protocols, Bluetooth, wireless USB, and cellular protocols. Exemplary constrained devices comprise wireless keyboards, wireless mice, wireless speakers, smart phones, and personal gaming systems.

The wireless communication device 104 may comprise a host device such as a computer or a game console. The wireless communication device 104 may comprise suitable logic, circuitry, interfaces, and/or code for implementing functions of a wireless communication device and for implementing various aspects of the present invention. The wireless communication device 104 may support any of one or more wireless protocols such as the IEEE 802.11 family of protocols, Bluetooth, wireless USB, and cellular protocols.

The wireless communication device 106 may comprise a wireless access point. The wireless communication device 106 may comprise suitable logic, circuitry, interfaces, and/or code for implementing functions of a wireless communication device and for implementing various aspects of the present invention. The wireless communication device 106 may support any of one or more wireless protocols such as the IEEE 802.11 family of protocols, Bluetooth, wireless USB, and cellular protocols.

As shown by the inset 110, the device 104 may keep track of scheduled medium access periods. In the exemplary embodiment depicted in FIG. 1A, medium access periods 108 have been scheduled for the device 102 and medium access periods 110 have been scheduled for the device 106. In an embodiment of the invention, the periods 108 may have been scheduled based on communications between the devices 102 and 104 without any other devices being aware of the scheduling, and the periods 112 may have been scheduled based on communications between the devices 106 and 104 without any other devices being aware of the scheduling. In such an embodiment, the device 102 and other devices in the vicinity (not shown) may be unaware of the scheduled periods 112, and the device 106 and other devices in the vicinity (not shown) may be unaware of the scheduled periods 108. In another embodiment of the invention, however, scheduling information may be communicated to devices other than those that participated in the scheduling. For example, the existence of periods 112 may be communicated to the device 102 and/or to other devices (not shown), and the existence of periods 108 may be communicated to the device 106 and/or to other devices (not shown).

In an embodiment of the invention, the host device 104 may keep medium access period 114 unreserved to ensure that that, even if the devices 102 and 106 transmit for the duration of all of their respective medium access periods 108 and 112, there is still opportunity for other devices (not shown) to contend for the medium without interference from the devices 102 and 106. This may reduce the amount of contention required for such other devices (not shown) to gain access to the medium.

In operation, the wireless communication devices 102, 104, and 106 may communicate with each other wirelessly. Since the devices 102, 104, and 106 share the communication medium (the airspace), mechanisms are needed to prevent and/or mitigate the impact of lost or corrupted data resulting from transmissions colliding in the medium.

In a conventional wireless network, as opposed to the network 100, a conventional constrained device with data to transmit may proceed as follows. First, prior to transmitting, the conventional device may listen to the medium to detect whether another device is already transmitting on the medium. If so, the conventional device may hold off and try again later. If not, the conventional device may begin transmitting. When transmitting, the device may send a medium reservation message to reserve the medium. For example, a conventional IEEE 802.11 compatible device will send a request-to-send (RTS) frame. The conventional device may then listen for a medium reservation message indicating that the medium is ready for the conventional device to begin transmitting data. For example, a conventional IEEE 802.11 compatible device will listen for a clear-to-send (CTS) frame. In instances that the conventional device detects interference on the channel during or shortly after sending the initial message, it may determine that a collision has occurred and the process may start over after a backoff period. Another way a conventional device may detect a collision is from a failure to receive an acknowledgement of a transmission (ACK) from the intended receiver of the transmission. Thus, a significant portion a conventional device's power dissipation may be due to listening to the medium and contending for the medium.

As opposed to such a conventional device, aspects of the present invention enable the constrained devices 102 to expend significantly less energy listening to and contending for the medium. In this regard, the device 102 may be required to contend for the medium only until it is able to successfully communicate with the host device 104 to schedule subsequent medium access periods during which the medium may be available for the device 102 to transmit. Once one or more medium access periods have been scheduled for the device 102, the device 102 may no longer need to contend for the medium. That is, the device 102 may be able to gain access to the medium without having to alternately sense the medium and transmit RTS, or similar, messages. Rather, in various embodiments of the invention, receipt of a medium reservation message (MRM) during a medium access period scheduled for the device 102 may indicate that the medium is available for the transmissions by the device 102.

Additional power savings in the device 102 may be realized as a result of the device 102 only having to listen for messages from the host device 104 once one or more medium access periods have been scheduled for the device 102. In this regard, when contending for the medium, a device may need to its receiver to be highly sensitive in order to detect weak transmissions from devices other than the device 104. This higher sensitivity typically comes at the expense of increased power consumption. Conversely, when the device 102 only has to listen for messages from the device 104, the receiver of the device 102 may be configured into a lower sensitivity mode since signal strength of transmissions from the device 104 will be relatively strong at the device 102. Reducing receiver sensitivity in the device 102 may also save power by reducing unnecessary retransmissions by the host device 104. For example, if a weak signal from a far away device overlaps a transmission from the host device 104, a higher sensitivity receiver may detect the weak signal and determine a collision has occurred, even though the weak signal did not critically impact the transmission from the host device 104. As a result of the detected collision, the host device 104 may be triggered to retransmit unnecessarily. Conversely, a lower sensitivity receiver may not detect the weak transmission and, thus, may not determine that a collision has occurred. Accordingly, the lower sensitivity receiver may process the original transmission from the host device 104, and avoiding triggering an unnecessary retransmission.

Although various aspects of the invention are described with respect to wireless communications where the medium is the air, the invention is not so limited. Various aspects of the invention are applicable to other media such as optical fiber and copper.

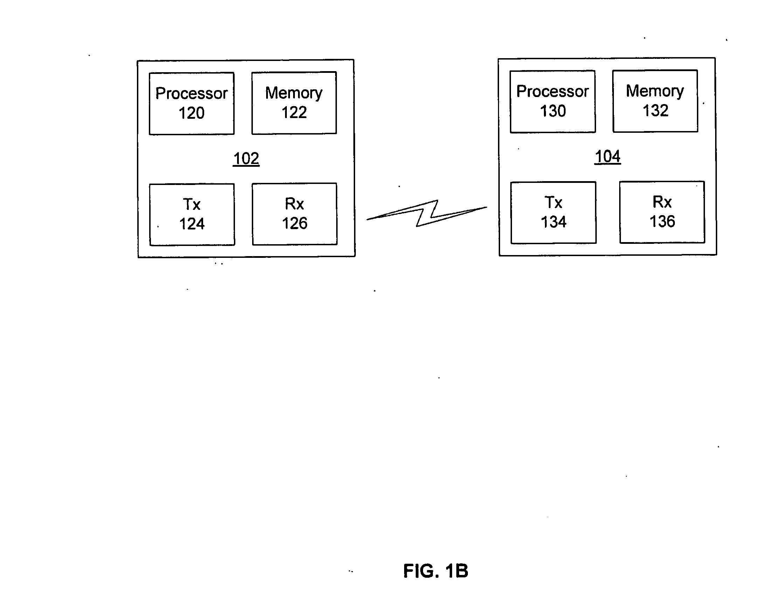

FIG. 1B is block diagram illustrating exemplary wireless devices, in accordance with an embodiment of the invention. Referring to FIG. 1B, the constrained device 102 may comprise a processor 120, memory 122, transmitter 124, and receiver 126 and the host device 104 may comprise a processor 130, memory 132, transmitter 134, and receiver 136.

The processor 120 may comprise suitable logic, circuitry, interfaces, and/or code for performing various functions of a wireless communication device and implementing various aspects of the present invention. For example, the processor 120 may execute instructions to implement an operating system of the device 102 and may execute instructions to perform packet processing functions.

The memory 122 may comprise RAM, ROM, NVRAM, flash, a hard drive, or any other suitable memory device. The memory 122 may store, for example, executable lines of code, received data, to-be-transmitted data, and/or any other digital information.

The transmitter 124 may comprise suitable logic, circuitry, interfaces, and/or code for processing baseband data to generate and transmit wireless signals. In various embodiments of the invention, various parameters such as transmit frequency and transmit power may be adjustable based, for example, on feedback and/or signals from the processor 120.

The receiver 126 may comprise suitable logic, circuitry, interfaces, and/or code for receiving wireless signals and processing the received signals to recover baseband data. In various embodiments of the invention, various parameters such as receive frequency and receiver sensitivity may be adjustable based, for example, on feedback and/or signals from the processor 120.

The processor 130 may comprise suitable logic, circuitry, interfaces, and/or code for performing various functions of a wireless communication device and implementing various aspects of the present invention. For example, the processor 130 may execute instructions to implement an operating system of the device 104 and may execute instructions to perform packet processing functions.

The memory 132 may comprise RAM, ROM, NVRAM, flash, a hard drive, or any other suitable memory device. The memory 132 may store, for example, executable lines of code, received data, to-be-transmitted data, and/or any other digital information.

The transmitter 134 may comprise suitable logic, circuitry, interfaces, and/or code for processing baseband data to generate and transmit wireless signals. In various embodiments of the invention, various parameters such as transmit frequency and transmit power may be adjustable based, for example, on feedback and/or signals from the processor 130.

The receiver 136 may comprise suitable logic, circuitry, interfaces, and/or code for receiving wireless signals and processing the received signals to recover baseband data. In various embodiments of the invention, various parameters such as receive frequency and receiver sensitivity may be adjustable based, for example, on feedback and/or signals from the processor 130.

In operation, on power up of the device 102, the processor 120, the receiver 126, and the transmitter 124 may interoperate to contend for access to the medium. Upon gaining access to the medium, the receiver 126, and the transmitter 124 may interoperate to participate in an exchange of packets with the host 104 to schedule medium access periods for the device 102. Subsequently, when the processor 120 has data to transmit, it may: (1) wait for the next medium access period scheduled for the device 102; (2) at the beginning of the next scheduled medium access period, configure the receiver 126 to enable reception of an MRM from the host 104; (3) during the scheduled medium access period, process received frames to detect an MRM frame designating the device 102; and (4) upon receiving such MRM frame, convey the data to be transmitted to the transmitter 124. The transmitter 124 may then generate the corresponding wireless signals to transmit the data.

In operation, the processor 130 may keep track of medium access periods scheduled by various devices, such as the devices 102 and 106. At the beginning of each medium access period, the processor 130, the receiver 136, and the transmitter 136 may interoperate to contend for access to the medium. Upon gaining access to the medium, the processor 130 may generate a MRM message designating the device for which the period is scheduled, and convey the MRM to the transmitter 134 for transmission. Subsequently, the processor 130, the receiver 136, and the transmitter 136 may interoperate to communicate, via the medium, with the device for which the medium access period is scheduled.

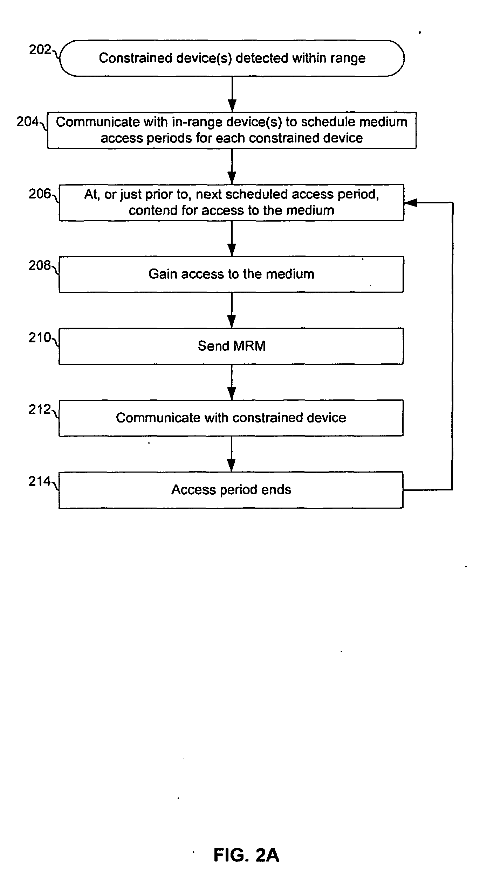

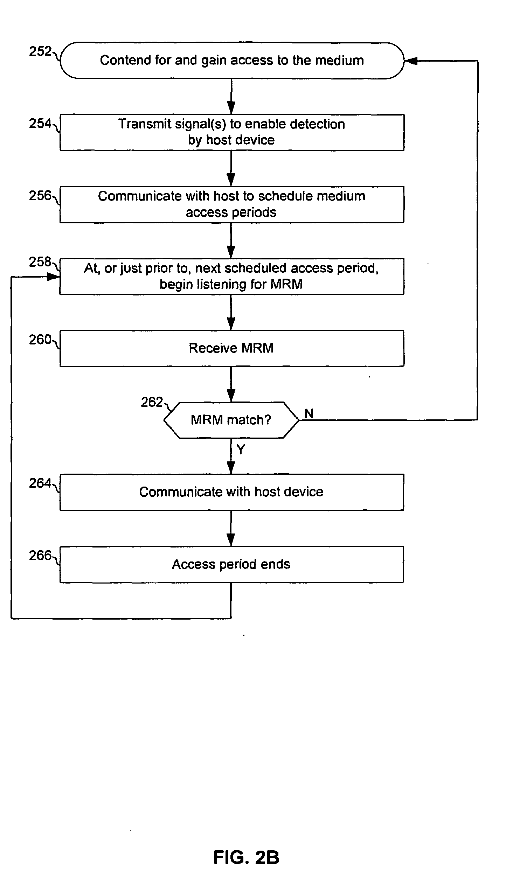

FIGs. 2A and 2B are flow charts illustrating exemplary steps for managing medium access and power consumption of a constrained wireless device, in accordance with an embodiment of the invention. The exemplary steps of FIG. 2A may be performed by a host device 104 and the exemplary steps of FIG. 2B may be performed by the constrained device 102.

The exemplary steps of FIG. 2A begin with step 202 in which the host 104 may detect in-range device(s), including the constrained device 102. For example, the host 104 may poll for devices and/or may receive a beacon or other discovery signal frame from the in-range device(s). In step 204, the device 104 may exchange packets with the detected devices to schedule medium access periods for the device(s). In step 206, at the beginning of, or shortly before, the next scheduled medium access period for the device 102, the device 104 may begin contending for access to the medium. In step 208, the device 104 may gain access to the medium. In step 210, the device 104 may send a medium reservation message (MRM). The MRM may comprise a field designating the device 102. For example, the MRM may comprise a field that holds a network address or other unique identifier of the device 102. In an exemplary embodiment of the invention, the MRM may be a CTS frame as defined in the IEEE 802.11 standard. In other embodiments of the invention, a difference frame could be defined for use as an MRM. In step 212, the device 104 may receive packets from the device 102 and may send packets to the device 102. In step 214, the medium access period may end and the exemplary steps may return to step 206. In this regard, the device 104 may loop through steps 206 through 214 as it cycles through the medium access period scheduled for the detected in-range devices for which medium access periods were scheduled in step 204.

The exemplary steps of FIG. 2B begin with step 252 in which, after initialization (e.g. power up or reset), the device 102 may contend for and eventually gain access to the medium. In step 254 the device 102 may transmit a signal to enable detection by the host device 104. For example, the device 102 may respond to a polling signal from the device 104 and/or transmit a beacon or other discovery signal. In step 256, the device 102 may communicate with the device 104 to schedule one or more medium access periods for the device 102. In step 258, at the beginning of, or shortly before, the next medium access periods scheduled for the device 102, the device 102 may begin listening for a medium reservation message (MRM) from the device 104. In step 260, the device 102 may receive a MRM from the device 104. In step 262, the device 102 may verify that the MRM designates the device 102. In this regard, the MRM designating a different device during what the device 102 believed to be a medium access period scheduled for it may indicate that an error has occurred in the scheduling and/or synchronization of the devices 102 and 104. Accordingly, the exemplary steps may return to step 252. Alternatively, the device 102 may repeat listening for some additional period of time and/or some additional number of iterations before deciding that a restart is needed. Back in step 262, in instances that the MRM does designate the device 104, then the exemplary steps may advance to step 264. In step 264, the device 102 may send data to and/or receive data from the device 104. In step 266, the medium access period may end and the steps may return to step 258.

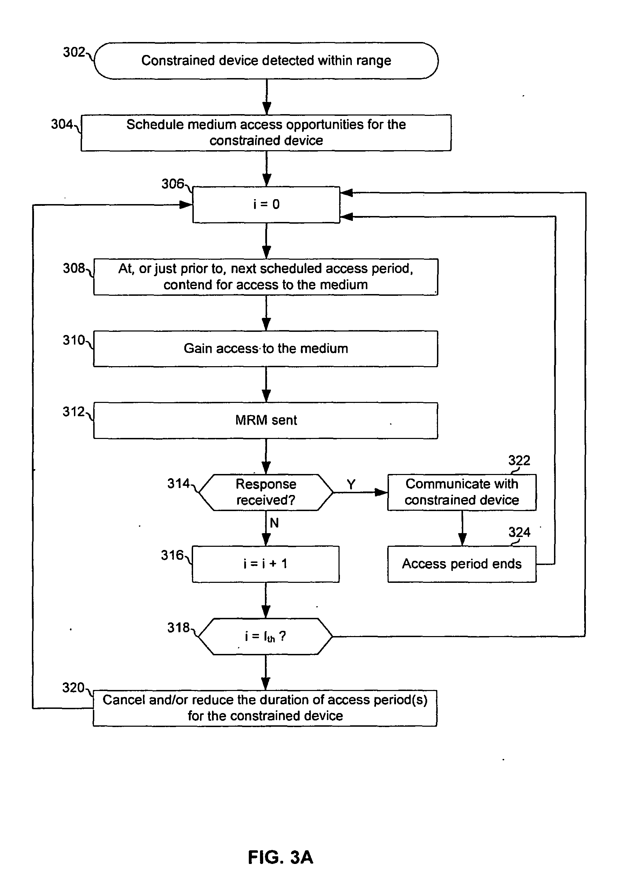

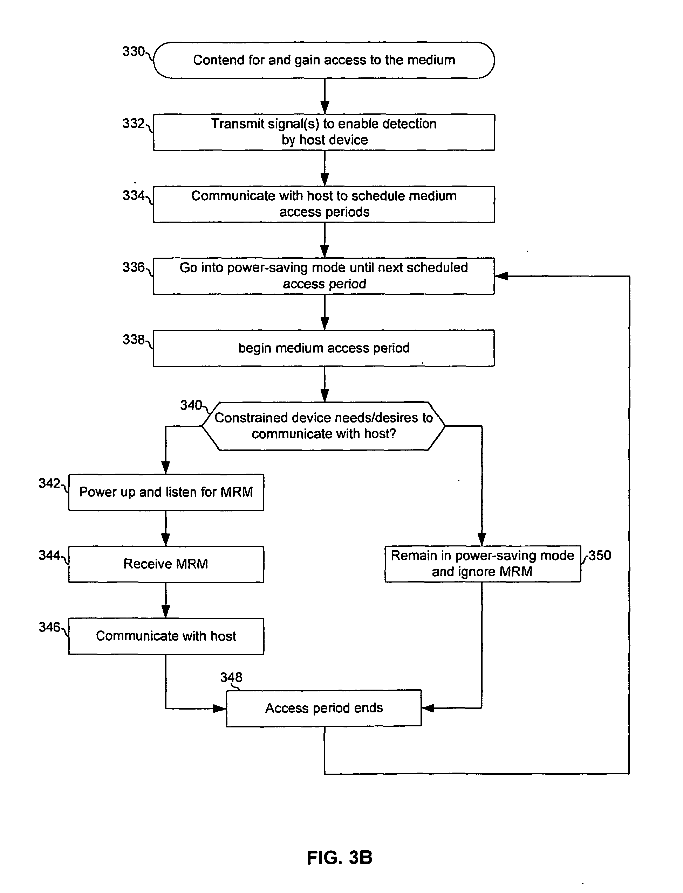

FIGs. 3A and 3B are flow charts illustrating exemplary steps for managing medium access and power consumption of a constrained wireless device that supports one or more power saving modes of operation, in accordance with an embodiment of the invention. The exemplary steps of FIG. 3A may be performed by a host device 104 and the exemplary steps of FIG. 3B may be performed by the constrained device 102.

The exemplary steps of FIG. 3A may begin with step 302 in which the host 104 may detect the device 102. For example, the host 104 may poll for devices and/or may receive a beacon or other discovery signal frame from the device 102. In step 304, the device 104 may exchange packets with the device 102 to schedule medium access periods for the device 102. In step 306, the device 104 may initialize a counter, i, which may keep track of the number of medium access periods scheduled for the device 102 in which the device 102 did not send any data to the device 104. In step 308, at the beginning of, or shortly before, the next scheduled medium access period for the device 102, the device 104 may begin contending for access to the medium. In step 310, the device 104 may gain access to the medium. In step 312, the device 104 may send a medium reservation message (MRM). The MRM may comprise a field designating the device 102. For example, the MRM may comprise a field that holds a network address or other unique identifier of the device 102. In step 314, in instances that the device 104 does not receive any communications from the device 102, then, after a timeout period, the steps may advance to step 316. In step 316, the counter, i, may be incremented. In step 318, i may be compared to a threshold value Iₜₕ. The threshold value may be set by, for example, a network administrator based on network requirements. In instances that i is equal to Iₜₕ, then in step 320, the device 104 may cancel and/or reduce the duration of one or more future medium access periods scheduled for device 102. Subsequent to step 320, the exemplary steps may return to step 306 or may return to step 304 if, for example, all future medium access periods are cancelled.

Returning to step 314, in instances that communications are received from the device 102 before a timeout, then in step 322 the device 104 exchange packets with the device 102. In an embodiment of the invention, the communications between the devices 102 and 104 during step 322 may include scheduling, rescheduling, and/or adjusting a duration of one or more medium access periods for the device 102. For example, if one or more medium access periods previously scheduled for the device 102 have been cancelled in step 320, the device 104 may notify the device 102 of such cancellations and the device 102 may accept such cancellations or may attempt to reschedule the medium access periods or schedule different medium access periods. In step 324 the medium access period may end and the steps may return to step 306.

The exemplary steps of FIG. 3B begin with step 330 in which, after initialization (e.g. power up or reset), the device 102 may contend for and eventually gain access to the medium. In step 332 the device 102 may transmit a signal to enable detection by the host device 104. For example, the device 102 may respond to a polling signal from the device 104 and/or transmit a beacon or other discovery signal. In step 334, the device 102 may communicate with the device 104 to schedule one or more medium access periods for the device 102. In step 336, the device 102 may transition into a power-saving configuration until its next scheduled medium access time. For example, one or more of the processor 120, the memory 122, the transmitter 124, the receiver 126, and/or one or more portions of thereof may be configured into a power-saving mode. In an embodiment of the invention, configuration may comprise disabling circuitry, reducing a rate at which circuitry is clocked, and reducing a frequency with which various operations are performed. Disabling circuitry may comprise, for example, holding the circuitry in a reset state or by disconnecting supply power from the circuitry. In step 338, a medium access period scheduled for the device 102 may begin. In step 340, if the device 102 does not have anything to transmit during the current medium access period, then in step 350, the device 102 may remain in a power-saving mode and may ignore any MRMs received from the device 104. Once the current medium access period ends in step 348, then the steps may return to step 336.

Returning to step 340, if the device 102 does have something to transmit during the current medium access period, then in step 342, the device 102 may transition out of the power-saving mode into a different mode of operation. In an embodiment of the invention, the device 102 may support a variety of modes of operation such as a first power-saving mode in which both transmitter 124 and receiver 126 are in a lower-power configuration, a second power saving mode in which the receiver 124 is powered-up but the receiver 126 is in a lower-power configuration, and a fully operational mode in which both the transmitter 124 and the receiver 126 are powered-up. In various embodiments of the invention, the different modes of operation may correspond to different receiver sensitivity. For example, the receiver 126 may be configured into a high-sensitivity mode during step 330 when the device 102 is concerned with detecting signals from sources other than the device 104, but may be configured into a low-sensitivity mode in steps 342-346 when the device 102 is only concerned with the relatively strong signals transmitted by the device 104. The foregoing modes of operation are only exemplary and additional and/or other modes of operation may be supported by the device 102. In this regard, the device 102 may power up the receiver 126 and begin listening for a MRM from the device 104. In step 346, upon receiving an MRM designating the device 102, the device 102 may begin transmitting onto the medium. In step 348, when the current medium access period ends, the steps may return to step 336.

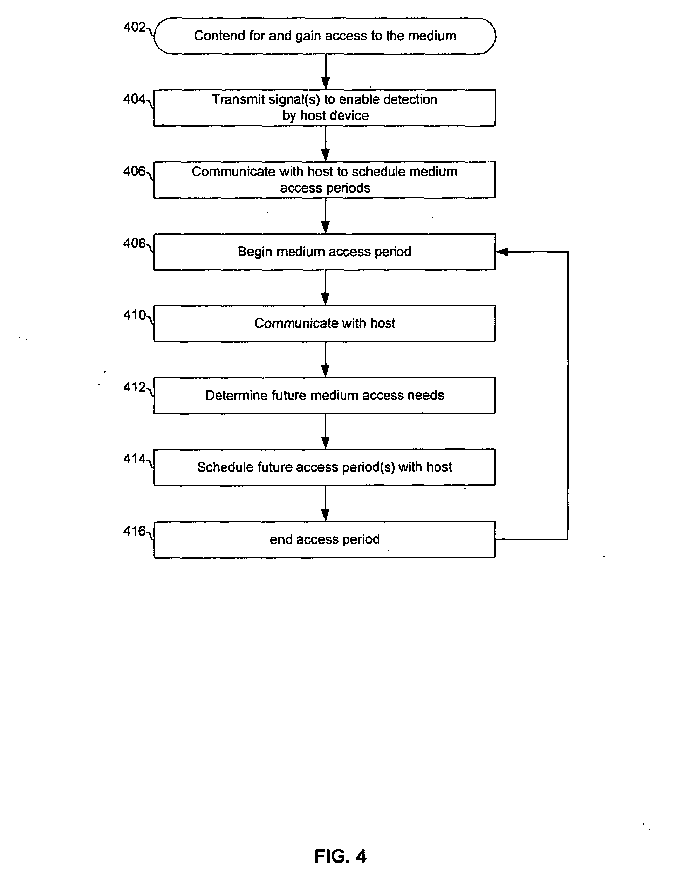

FIG. 4 is a flow chart illustrating exemplary steps for managing medium access and power consumption, in accordance with an embodiment of the invention. Referring to FIG. 4, the exemplary steps may begin with step 402 in which, after initialization (e.g. power up or reset), the device 102 may contend for and eventually gain access to the medium. In step 404 the device 102 may transmit a signal to enable detection by the host device 104. For example, the device 102 may respond to a polling signal from the device 104 and/or transmit a beacon or other discovery signal. In step 406, the device 102 may communicate with the device 104 to schedule one or more medium access periods for the device 102. In step 408, a medium access period scheduled for the device 102 may begin. In step 410, the device 102 may begin communicating with the device 104. Before or during the current medium access period, the device 102 may also determine its future medium access needs. In this regard, the device 102 may predict when and/or how much data it may have to transmit in the future. Such a prediction may be based on, for example, software applications running on the device 102, and/or historical patterns. In step 414, the device 102 may communicate with the device 104 to schedule future medium access periods based on the prediction generated in step 412. In step 416, the current medium access period may end and the device 102 may wait for its next scheduled medium access period, at which time the steps may return to step 408.

In an exemplary embodiment of the invention, a first wireless communication device 102 may be operable to communicate with a second wireless communication device 104 to schedule access to a medium that is shared by the device 102, the device 104, and possibly one or more other wireless communication devices. After one or more medium access periods 108 are scheduled for the first device 102, the first device 102 may refrain from transmitting data onto the medium until a medium reservation message which designates the first device 102 is received by the first device 102 during one of the medium access periods 108. The first device 102 may then transmit the data onto the medium upon receiving, during one or more of the medium access periods 108, a medium reservation message designating the first device 102. One or more portions of the first wireless communication device 102 (e.g., the transmitter 124, and/or the receiver 126 and/or portions thereof) may be configured to operate in a first mode of operation during medium access periods 108, and configured to operate in a power-saving mode of operation at times other than the medium access periods 108 such as periods 112 and 114. When the first device 102 has data to transmit, one or more portions of the first device 102 may be configured to operate in a first mode of operation during medium access periods 108. The one or more portions may comprise, for example, the transmitter 124, and/or the receiver 126 and/or portions thereof. When the first device 102 does not have data to transmit, one or more portions of the first device 102 (e.g., the transmitter 124, and/or the receiver 126 and/or portions thereof) may be configured to operate in a power-saving mode of operation during the medium access periods 108. A receiver 126 of the first device 102 may be configured into a higher-sensitivity mode of operation prior to and during initial scheduling of one or more medium access periods 108, and configured into a lower-sensitivity mode of operation subsequent to initial scheduling. A first medium access period 108₁ for the first device 102 may be scheduled during initial communications between the first device 102 and the device 104. A subsequent medium access period for the first device 102, such as period 108₂, may be scheduled during the medium access period 108₁.

In various embodiments of the invention, a first wireless communication device 104 may communicate with one or more other wireless communication devices 102 and 106 to schedule access to a medium that is shared by the devices 102, 104, and 106. The first device 104 may contend for access to the medium at, or just prior to, a beginning of a medium access period 108 scheduled for the device 102. During a medium access period for the device 102, such as period 108₂, after gaining access to the medium, the first device 104 may transmit a medium reservation message designating the device 102. The medium reservation message may be sent without the device 104 receiving a medium reservation message from the device 102. The first device 104 may cancel one or more future medium access periods scheduled for the particular device 102, such as period 108₃, when no communication from the device 102 has been received during one or more past and/or current medium access periods scheduled for the device 102, such as periods 108₁ and 108₂. The first device 104 may reduce a duration of one or more future medium access periods scheduled for the device 102, such as periods 108₃, when no communications from the device 102 has been received during one or more past and/or current medium access periods scheduled for the device 102, such as periods 108₁ and 108₂. The one or more other communication devices 102 and 106 may comprise at least one access point 106. A first medium access 108₁ period for the device 102 may be scheduled during initial communications between the device 102 and the first device 104. Subsequent medium access periods 108₂ and 108₃. and/or a duration thereof determined, may be scheduled while the device 102 is communicating with the first device 104 during the first medium access period 108₁.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for medium access and power consumption for constrained wireless devices.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method comprising:
in a wireless communication device (102, 104, 106):
configuring a receiver of said wireless communication device (102, 104, 106) to receive communications in a higher-sensitivity mode of operation;
communicating with one of one or more other wireless communication devices (102, 104, 106) to schedule access to a medium shared by said wireless communication device (102, 104, 106) and said one or more other wireless communication devices (102, 104, 106) while in the higher-sensitivity mode of operation;
after one or more medium access periods (108, 110, 112, 114) are scheduled for said wireless communication device (102, 104, 106), configuring said receiver of said wireless communication device (102, 104, 106) to receive communications in a lower-sensitivity mode of operation and transmitting data onto said medium upon receiving from one of one or more other wireless communication devices (102, 104, 106), during one of said one or more medium access periods (108, 110, 112, 114) scheduled for said wireless communication device (102, 104, 106), a medium reservation message designating said wireless communication device (102, 104, 106).

2. The method according to claim 1, comprising:
configuring one or more portions of said wireless communication device to operate in a first mode of operation during medium access periods scheduled for said wireless communication device; and
configuring said one or more portions of said wireless communication device to operate in a power-saving mode of operation at times other than said medium access periods scheduled for said wireless communication device.

3. The method according to claim 1, comprising:
before or during a current medium access period (108, 110, 112, 114), determining future medium access needs of said wireless communication device (102, 104, 106); and
scheduling, rescheduling, and/or adjusting a duration of one or more medium access periods for said wireless communication device (102, 104, 106).

4. The method according to claim 1, comprising:
when said wireless communication device (102, 104, 106) has data to transmit, configuring one or more portions of said wireless communication device (102, 104, 106) to operate in a first mode of operation during medium access periods (108, 110, 112, 114) scheduled for said wireless communication device (102, 104, 106); and
when said wireless communication device (102, 104, 106) does not have data to transmit, configuring said one or more portions of said wireless communication device (102, 104, 106) to operate in a power-saving mode of operation during said medium access periods (108, 110, 112, 114) scheduled for said wireless communication device (102, 104, 106).

5. The method according to claim 1, wherein:
after one or more medium access periods (108, 110, 112, 114) are scheduled for said wireless communication device (102, 104, 106), said wireless communication device (102, 104, 106) refraining from transmitting data, or reducing or limiting transmissions of data, onto said medium until said medium reservation message which designates said wireless communication device (102, 104, 106) is received by said wireless communication device (102, 104, 106) during said one or more medium access periods scheduled for said wireless communication device (102, 104, 106).

6. The method according to claim 1, comprising:
scheduling a first medium access period (108₁) for said wireless communication device (102, 104, 106) during said communicating; and
scheduling a subsequent medium access period (108₂, 108₃) for said wireless communication device (102, 104, 106) while communicating with one of said other wireless communication devices (102, 104, 106) during said first medium access period (108₁).

7. A method comprising:
in a wireless communication device (102, 104, 106):
configuring a receiver of said wireless communication device (102, 104, 106) to receive communications in a higher-sensitivity mode of operation;
communicating with one of one or more other wireless communication devices (102, 104, 106) to schedule access to a medium shared by said wireless communication device (102, 104, 106) and said one or more other wireless communication devices (102, 104, 106) while in the higher-sensitivity mode of operation;
configuring said receiver of said wireless communication device (102, 104, 106) to receive communications in a lower-sensitivity mode of operation subsequent to said scheduling;
contending for access to said medium at, or just prior to, a beginning of a medium access period (108, 110, 112, 114) scheduled for said one of the one or more of other wireless communication devices (102, 104, 106);
during said medium access period (108, 110, 112, 114), after gaining access to said medium, transmitting a medium reservation message designating said one of the one or more of other wireless communication devices (102, 104, 106) while in the lower-sensitivity mode of operation.

8. The method according to claim 7, wherein said medium reservation message is sent without receiving a medium reservation message from said one or more other wireless communication devices (102, 104, 106).

9. The method according to claim 7, comprising:
one or both of:
cancelling one or more future medium access periods (108, 110, 112, 114) scheduled for one of said other wireless communication devices (102, 104, 106), and
reducing a duration of one or more future medium access periods (108, 110, 112, 114) scheduled for said one of said other wireless communication devices (102, 104, 106),
when no communications from said one of said other wireless communication devices (102, 104, 106) have been received during one or more past and/or current medium access periods (108, 110, 112, 114) scheduled for said one of said other wireless communication devices (102, 104, 106).

10. The method according to claim 5, wherein said one or more other communication devices comprise at least one access point.

11. The method according to claim 7, comprising:
scheduling a first medium access period (108₁) for one of said other wireless communication devices (102, 104, 106) during said communicating; and
scheduling a subsequent medium access period (108₂, 108₃) for said one of said other wireless communication devices (102, 104, 106) while communicating with said one of said other wireless communication devices (102, 104, 106) during said first medium access period (108₁).

12. A system comprising:
one or more circuits (120, 122, 124, 126) for use in a wireless communication device (102, 104, 106), said one or more circuits (120, 122, 124, 126) being operable to:
configure a receiver of said wireless communication device (102, 104, 106) to receive communications in a higher-sensitivity mode of operation;
communicate with one of one or more other wireless communication devices (102, 104, 106) to schedule access to a medium that is shared by said wireless communication device (102, 104, 106) and said one or more other wireless communication devices (102, 104, 106) while in the higher-sensitivity mode of operation;
after one or more medium access periods (108, 110, 112, 114) are scheduled for said wireless communication device (102, 104, 106), configure said receiver of said wireless communication device (102, 104, 106) to receive communications in a lower-sensitivity mode of operation and transmit data onto said medium upon receiving from the one of the one or more other wireless communication devices (102, 104, 106), during one of said one or more medium access periods (108, 110, 112, 114) scheduled for said wireless communication device (102, 104, 106), a medium reservation message designating said wireless communication device (102, 104, 106).

13. The system according to claim 12, wherein said one or more circuits (120, 122, 124, 126) are operable to:
when said wireless communication device (102, 104, 106) has data to transmit, configure one or more portions of said wireless communication device (102, 104, 106) to operate in a first mode of operation during medium access periods (108, 110, 112, 114) scheduled for said wireless communication device (102, 104, 106); and
when said wireless communication device (102, 104, 106) does not have data to transmit, configure said one or more portions of said wireless communication device (102, 104, 106) to operate in a power-saving mode of operation during said medium access periods (108, 110, 112, 114) scheduled for said wireless communication device (102, 104, 106).

14. The system according to claim 12, wherein:
after one or more medium access periods (108, 110, 112, 114) are scheduled for said wireless communication device (102, 104, 106), refrain said wireless communication device (102, 104, 106) from transmitting data, or reduce or limit transmissions of data, onto said medium until said medium reservation message which designates said wireless communication device (102, 104, 106) is received by said wireless communication device (102, 104, 106) during said one or more medium access periods scheduled for said wireless communication device (102, 104, 106).

15. A system comprising:
one or more circuits (130, 132, 134, 136) for use in a wireless communication device (102, 104, 106) adapted to:
configure a receiver of said wireless communication device (102, 104, 106) to receive communications in a higher-sensitivity mode of operation;
communicate with one of one or more other wireless communication devices (102, 104, 106) to schedule access to a medium that is shared by said wireless communication device (102, 104, 106) and said one or more other wireless communication devices (102, 104, 106) while in the higher-sensitivity mode of operation;
configure said receiver of said wireless communication device (102, 104, 106) to receive communications in a lower-sensitivity mode of operation subsequent to said scheduling;
contend for access to said medium at, or just prior to, a beginning of a medium access period (108, 110, 112, 114) scheduled for said one of the one or more other wireless communication devices (102, 104, 106);
during said medium access period (108, 110, 112, 114), after gaining access to said medium, transmit a medium reservation message designating said one of the one or more other wireless communication devices (102, 104, 106).

## Patentansprüche

1. Verfahren, das umfasst:
- in einer drahtlosen Kommunikationsvorrichtung (102, 104, 106):
- Konfigurieren eines Empfängers der drahtlosen Kommunikationsvorrichtung (102, 104, 106) dafür, in einer Betriebsart mit höherer Empfindlichkeit Kommunikationen zu empfangen,
- Kommunizieren mit einer von einer oder mehreren anderen drahtlosen Kommunikationsvorrichtungen (102, 104, 106), um den Zugriff auf ein Medium zu planen, das während der Betriebsart mit höherer Empfindlichkeit von der drahtlosen Kommunikationsvorrichtung (102, 104, 106) und der einen oder den mehreren anderen drahtlosen Kommunikationsvorrichtungen (102, 104, 106) gemeinsam genutzt wird,
- nachdem eine oder mehrere Medienzugriffsperioden (108, 110, 112, 114) für die drahtlose Kommunikationsvorrichtung (102, 104, 106) geplant worden sind, Konfigurieren des Empfängers der drahtlosen Kommunikationsvorrichtung (102, 104, 106) dafür, in einer Betriebsart mit niedrigerer Empfindlichkeit Kommunikationen zu empfangen, und Senden von Daten an das Medium bei Empfang einer die drahtlose Kommunikationsvorrichtung (102, 104, 106) benennenden Medienreservierungsnachricht von einer von einer oder mehreren anderen drahtlosen Kommunikationsvorrichtungen (102, 104, 106) während einer der einen oder mehreren für die drahtlose Kommunikationsvorrichtung (102, 104, 106) geplanten Medienzugriffsperioden (108, 110, 112, 114).

2. Verfahren nach Anspruch 1, das umfasst:
- Konfigurieren eines oder mehrerer Abschnitte der drahtlosen Kommunikationsvorrichtung dafür, während für die drahtlose Kommunikationsvorrichtung geplanter Medienzugriffsperioden in einer ersten Betriebsart zu arbeiten, und
- Konfigurieren des einen oder der mehreren Abschnitte der drahtlosen Kommunikationsvorrichtung dafür, in Zeiten, die keine für die drahtlose Kommunikationsvorrichtung geplante Medienzugriffsperioden sind, in einer Energiesparbetriebsart zu arbeiten.

3. Verfahren nach Anspruch 1, das umfasst:
- Bestimmen zukünftiger Medienzugriffserfordernisse der drahtlosen Kommunikationsvorrichtung (102, 104, 106) vor oder während einer aktuellen Medienzugriffsperiode (108, 110, 112, 114), und
- Planen, erneutes Planen und/oder Einstellen einer Dauer einer oder mehrerer Medienzugriffsperioden für die drahtlose Kommunikationsvorrichtung (102, 104, 106).

4. Verfahren nach Anspruch 1, das umfasst:
- wenn die drahtlose Kommunikationsvorrichtung (102, 104, 106) Daten zu senden hat, Konfigurieren eines oder mehrerer Abschnitte der drahtlosen Kommunikationsvorrichtung (102, 104, 106) dafür, während für die drahtlose Kommunikationsvorrichtung (102, 104, 106) geplanter Medienzugriffsperioden (108, 110, 112, 114) in einer ersten Betriebsart zu arbeiten, und
- wenn die drahtlose Kommunikationsvorrichtung (102, 104, 106) keine Daten zu senden hat, Konfigurieren des einen oder der mehreren Abschnitte der drahtlosen Kommunikationsvorrichtung (102, 104, 106) dafür, während der für die drahtlose Kommunikationsvorrichtung (102, 104, 106) geplanten Medienzugriffsperioden (108, 110, 112, 114) in einer Energiesparbetriebsart zu arbeiten.

5. Verfahren nach Anspruch 1, wobei:
- nachdem eine oder mehrere Medienzugriffsperioden (108, 110, 112, 114) für die drahtlose Kommunikationsvorrichtung (102, 104, 106) geplant worden sind, die drahtlose Kommunikationsvorrichtung (102, 104, 106) es unterlässt, Daten zu senden, oder Übertragungen von Daten an das Medium reduziert oder begrenzt bis die die drahtlose Kommunikationsvorrichtung (102, 104, 106) benennende Medienreservierungsnachricht während der einen oder mehreren für die drahtlose Kommunikationsvorrichtung (102, 104, 106) geplanten Medienzugriffsperioden von der drahtlosen Kommunikationsvorrichtung (102, 104, 106) empfangen wird.

6. Verfahren nach Anspruch 1, das umfasst:
- Planen einer ersten Medienzugriffsperiode (108₁) für die drahtlose Kommunikationsvorrichtung (102, 104, 106) während der Kommunikation, und
- Planen einer darauffolgenden Medienzugriffsperiode (108₂, 108₃) für die drahtlose Kommunikationsvorrichtung (102, 104, 106) während der Kommunikation mit einer der anderen drahtlosen Kommunikationsvorrichtungen (102, 104, 106) während der ersten Medienzugriffsperiode (108₁).

7. Verfahren, das umfasst:
- in einer drahtlosen Kommunikationsvorrichtung (102, 104, 106):
- Konfigurieren eines Empfängers der drahtlosen Kommunikationsvorrichtung (102, 104, 106) dafür, in einer Betriebsart mit höherer Empfindlichkeit Kommunikationen zu empfangen,
- Kommunizieren mit einer von einer oder mehreren anderen drahtlosen Kommunikationsvorrichtungen (102, 104, 106), um den Zugriff auf ein Medium zu planen, das während der Betriebsart mit höherer Empfindlichkeit von der drahtlosen Kommunikationsvorrichtung (102, 104, 106) und der einen oder den mehreren anderen drahtlosen Kommunikationsvorrichtungen (102, 104, 106) gemeinsam genutzt wird,
- Konfigurieren des Empfängers der drahtlosen Kommunikationsvorrichtung (102, 104, 106) dafür, im Anschluss an das Planen in einer Betriebsart mit niedrigerer Empfindlichkeit Kommunikationen zu empfangen,
- Konkurrieren um den Zugriff auf das Medium zu oder direkt vor dem Beginn einer Medienzugriffsperiode (108, 110, 112, 114), die für die eine der einen oder mehreren anderen drahtlosen Kommunikationsvorrichtungen (102, 104, 106) geplant worden ist,
- während der Medienzugriffsperiode (108, 110, 112, 114), nach dem Erlangen des Zugriffs auf das Medium, Senden einer die eine der einen oder mehreren anderen drahtlosen Kommunikationsvorrichtungen (102, 104, 106) benennenden Medienreservierungsnachricht während der Betriebsart mit niedrigerer Empfindlichkeit.

8. Verfahren nach Anspruch 7, wobei die Medienreservierungsnachricht gesendet wird, ohne von der einen oder den mehreren anderen drahtlosen Kommunikationsvorrichtungen (102, 104, 106) eine Medienreservierungsnachricht empfangen zu haben.

9. Verfahren nach Anspruch 7, das umfasst:
- Löschen einer oder mehrerer zukünftiger Medienzugriffsperioden (108, 110, 112, 114), die für eine der anderen drahtlosen Kommunikationsvorrichtungen (102, 104. 106) geplant sind, und/oder
- Verringern der Dauer einer oder mehrerer zukünftiger Medienzugriffsperioden (108, 110, 112, 114), die für die eine der anderen drahtlosen Kommunikationsvorrichtungen (102, 104, 106) geplant sind, wenn während einer oder mehrerer vergangener und/oder aktueller für die eine der anderen drahtlosen Kommunikationsvorrichtungen (102, 104, 106) geplanter Medienzugriffsperioden (108, 110, 112, 114) von der einen der anderen drahtlosen Kommunikationsvorrichtungen (102, 104, 106) keine Kommunikationen empfangen werden.

10. Verfahren nach Anspruch 5, wobei die eine oder mehreren anderen drahtlosen Kommunikationsvorrichtungen wenigstens einen Zugangspunkt umfassen.

11. Verfahren nach Anspruch 7, das umfasst:
- Planen einer ersten Medienzugriffsperiode (108₁) für eine der anderen drahtlosen Kommunikationsvorrichtungen (102, 104, 106) während der Kommunikation, und
- Planen einer darauffolgenden Medienzugriffsperiode (108₂, 108₃) für die eine der anderen drahtlosen Kommunikationsvorrichtungen (102, 104, 106) während der Kommunikation mit der einen der anderen drahtlosen Kommunikationsvorrichtungen (102, 104, 106) während der ersten Medienzugriffsperiode (108₁).

12. System, das umfasst:
- eine oder mehrere Schaltungen (120, 122, 124, 126) zur Verwendung in einer drahtlosen Kommunikationsvorrichtung (102, 104, 106), wobei die eine oder mehreren Schaltungen (120, 122, 124, 126) betriebsfähig dafür ausgelegt sind:
- einen Empfänger der drahtlosen Kommunikationsvorrichtung (102, 104, 106) dafür zu konfigurieren, in einer Betriebsart mit höherer Empfindlichkeit Kommunikationen zu empfangen,
- mit einer von einer oder mehreren anderen drahtlosen Kommunikationsvorrichtungen (102, 104, 106) zu kommunizieren, um den Zugriff auf ein Medium zu planen, das während der Betriebsart mit höherer Empfindlichkeit von der drahtlosen Kommunikationsvorrichtung (102, 104, 106) und der einen oder den mehreren anderen drahtlosen Kommunikationsvorrichtungen (102, 104, 106) gemeinsam genutzt wird,
- nachdem eine oder mehrere Medienzugriffsperioden (108, 110, 112, 114) für die drahtlose Kommunikationsvorrichtung (102, 104, 106) geplant worden sind, den Empfänger der drahtlosen Kommunikationsvorrichtung (102, 104, 106) dafür zu konfigurieren, in einer Betriebsart mit niedrigerer Empfindlichkeit Kommunikationen zu empfangen, und bei Empfang einer die drahtlose Kommunikationsvorrichtung (102, 104, 106) benennenden Medienreservierungsnachricht von der einen der einen oder mehreren anderen drahtlosen Kommunikationsvorrichtungen (102, 104, 106) während einer der einen oder mehreren für die drahtlose Kommunikationsvorrichtung (102, 104, 106) geplanten Medienzugriffsperioden (108, 110, 112, 114) Daten an das Medium zu senden.

13. System nach Anspruch 12, wobei die eine oder mehreren Schaltungen (120, 122, 124, 126) betriebsfähig dafür ausgelegt sind:
- wenn die drahtlose Kommunikationsvorrichtung (102, 104, 106) Daten zu senden hat, einen oder mehrerer Abschnitte der drahtlosen Kommunikationsvorrichtung (102, 104, 106) dafür zu konfigurieren, während für die drahtlose Kommunikationsvorrichtung (102, 104, 106) geplanter Medienzugriffsperioden (108, 110, 112, 114) in einer ersten Betriebsart zu arbeiten, und
- wenn die drahtlose Kommunikationsvorrichtung (102, 104, 106) keine Daten zu senden hat, den einen oder die mehreren Abschnitte der drahtlosen Kommunikationsvorrichtung (102, 104, 106) dafür zu konfigurieren, während der für die drahtlose Kommunikationsvorrichtung (102, 104, 106) geplanten Medienzugriffsperioden (108, 110, 112, 114) in einer Energiesparbetriebsart zu arbeiten.

14. System nach Anspruch 12, wobei:
- nachdem eine oder mehrere Medienzugriffsperioden (108, 110, 112, 114) für die drahtlose Kommunikationsvorrichtung (102, 104, 106) geplant worden sind, die drahtlose Kommunikationsvorrichtung (102, 104, 106) es unterlässt, Daten zu senden, oder Übertragungen von Daten an das Medium reduziert oder begrenzt bis die die drahtlose Kommunikationsvorrichtung (102, 104, 106) benennende Medienreservierungsnachricht während der einen oder mehreren für die drahtlose Kommunikationsvorrichtung (102, 104, 106) geplanten Medienzugriffsperioden von der drahtlosen Kommunikationsvorrichtung (102, 104, 106) empfangen wird.

15. System, das umfasst:
- eine oder mehrere Schaltungen (130, 132, 134, 136) zur Verwendung in einer drahtlosen Kommunikationsvorrichtung (102, 104, 106), die dafür ausgelegt sind:
- einen Empfänger der drahtlosen Kommunikationsvorrichtung (102, 104, 106) dafür zu konfigurieren, in einer Betriebsart mit höherer Empfindlichkeit Kommunikationen zu empfangen,
- mit einer von einer oder mehreren anderen drahtlosen Kommunikationsvorrichtungen (102, 104, 106) zu kommunizieren, um den Zugriff auf ein Medium zu planen, das während der Betriebsart mit höherer Empfindlichkeit von der drahtlosen Kommunikationsvorrichtung (102, 104, 106) und der einen oder den mehreren anderen drahtlosen Kommunikationsvorrichtungen (102, 104, 106) gemeinsam genutzt wird,
- den Empfänger der drahtlosen Kommunikationsvorrichtung (102, 104, 106) dafür zu konfigurieren, im Anschluss an das Planen in einer Betriebsart mit niedrigerer Empfindlichkeit Kommunikationen zu empfangen,
- um den Zugriff auf das Medium zu oder direkt vor dem Beginn einer Medienzugriffsperiode (108, 110, 112, 114) zu konkurrieren, die für die eine der einen oder mehreren anderen drahtlosen Kommunikationsvorrichtungen (102, 104, 106) geplant worden ist,
- während der Medienzugriffsperiode (108, 110, 112, 114), nach dem Erlangen des Zugriffs auf das Medium, eine die eine der einen oder mehreren anderen drahtlosen Kommunikationsvorrichtungen (102, 104, 106) benennende Medienreservierungsnachricht zu senden.

## Revendications

1. Procédé comprenant :
dans un dispositif de communication sans fil (102, 104, 106) :
la configuration d'un récepteur dudit dispositif de communication sans fil (102, 104, 106) pour recevoir des communications dans un mode de fonctionnement à sensibilité élevée ;
la communication avec un dispositif parmi un ou plusieurs autres dispositifs de communication sans fil (102, 104, 106) pour programmer un accès à un support partagé par ledit dispositif de communication sans fil (102, 104, 106) et lesdits un ou plusieurs autres dispositifs de communication sans fil (102, 104, 106) pendant qu'il se trouve dans le mode de fonctionnement à sensibilité élevée ;
après qu'une ou plusieurs périodes (108, 110, 112, 114) d'accès au support sont programmées pour ledit dispositif de communication sans fil (102, 104, 106), la configuration dudit récepteur dudit dispositif de communication sans fil (102, 104, 106) pour recevoir des communications dans un mode de fonctionnement à sensibilité faible, et la transmission de données sur ledit support lors de la réception depuis un dispositif parmi le ou les plusieurs autres dispositifs de communication sans fil (102, 104, 106), pendant une période parmi lesdites une ou plusieurs périodes (108, 110, 112, 114) d'accès au support programmée pour ledit dispositif de communication sans fil (102, 104, 106), d'un message de réservation de support désignant ledit dispositif de communication sans fil (102, 104, 106).

2. Procédé selon la revendication 1, comprenant :
la configuration d'une ou plusieurs parties dudit dispositif de communication sans fil pour fonctionner dans un premier mode de fonctionnement pendant des périodes d'accès au support programmées pour ledit dispositif de communication sans fil ; et
la configuration desdites une ou plusieurs parties dudit dispositif de communication sans fil pour fonctionner dans un mode de fonctionnement d'économie d'énergie à des moments autres que lesdites périodes d'accès au support programmées pour ledit dispositif de communication sans fil.

3. Procédé selon la revendication 1, comprenant :
avant et pendant une période (108, 110, 112, 114) d'accès au support actuelle, la détermination des futurs besoins d'accès au support dudit dispositif de communication sans fil (102, 104, 106) ; et
la programmation, la reprogrammation et/ou l'ajustement d'une durée des une ou plusieurs périodes d'accès au support pour ledit dispositif de communication sans fil (102, 104, 106).

4. Procédé selon la revendication 1, comprenant :
lorsque ledit dispositif de communication sans fil (102, 104, 106) a des données à transmettre, la configuration des une ou plusieurs parties dudit dispositif de communication sans fil (102, 104, 106) pour fonctionner dans un premier mode de fonctionnement pendant des périodes (108, 110, 112, 114) d'accès au support programmées pour ledit dispositif de communication sans fil (102, 104, 106); et
lorsque ledit dispositif de communication sans fil (102, 104, 106) n'a pas de données à transmettre, la configuration desdites une ou plusieurs parties dudit dispositif de communication sans fil (102, 104, 106) pour fonctionner dans un mode de fonctionnement d'économie d'énergie pendant lesdites périodes (108, 110, 112, 114) d'accès au support programmées pour ledit dispositif de communication sans fil (102, 104, 106).

5. Procédé selon la revendication 1, dans lequel :
après qu'une ou plusieurs périodes (108, 110, 112, 114) d'accès au support sont programmées pour ledit dispositif de communication sans fil (102, 104, 106), ledit dispositif de communication sans fil (102, 104, 106) se restreint de transmettre des données, ou réduit ou limite des transmissions de données, sur ledit support jusqu'à ce que ledit message de réservation de support qui désigne ledit dispositif de communication sans fil (102, 104, 106) soit reçu par ledit dispositif de communication sans fil (102, 104, 106) pendant lesdites une ou plusieurs périodes d'accès au support programmées pour ledit dispositif de communication sans fil (102, 104, 106).

6. Procédé selon la revendication 1, comprenant :
la programmation d'une première période (108₁) d'accès au support pour ledit dispositif de communication sans fil (102, 104, 106) pendant ladite communication ; et
la programmation d'une période (108₂, 108₃) d'accès au support ultérieure pour ledit dispositif de communication sans fil (102, 104, 106) tout en communiquant avec l'un desdits autres dispositifs de communication sans fil (102, 104, 106) pendant ladite première période (108₁) d'accès au support.

7. Procédé comprenant :
dans un dispositif de communication sans fil (102, 104, 106) :
la configuration d'un récepteur dudit dispositif de communication sans fil (102, 104, 106) pour recevoir des communications dans un mode de fonctionnement à sensibilité élevée ;
la communication avec un dispositif parmi un ou plusieurs autres dispositifs de communication sans fil (102, 104, 106) pour programmer un accès à un support partagé par ledit dispositif de communication sans fil (102, 104, 106) et lesdits un ou plusieurs autres dispositifs de communication sans fil (102, 104, 106) pendant qu'ils se trouvent dans le mode de fonctionnement à sensibilité élevée ;
la configuration dudit récepteur dudit dispositif de communication sans fil (102, 104, 106) pour recevoir des communications dans un mode de fonctionnement à sensibilité faible ultérieur à ladite programmation ;
la dispute de l'accès audit support à, ou juste avant, un début d'une période (108, 110, 112, 114) d'accès au support programmée pour ledit dispositif parmi les un ou plusieurs autres dispositifs de communication sans fil (102, 104, 106) ;
pendant ladite période (108, 110, 112, 114) d'accès au support, après avoir obtenu l'accès audit support, la transmission d'un message de réservation de support désignant ledit dispositif parmi les un ou plusieurs autres dispositifs de communication sans fil (102, 104, 106) pendant qu'ils se trouvent dans le mode de fonctionnement à sensibilité faible.

8. Procédé selon la revendication 7, dans lequel ledit message de réservation de support est envoyé sans recevoir un message de réservation de support depuis lesdits un ou plusieurs autres dispositifs de communication sans fil (102, 104, 106).

9. Procédé selon la revendication 7, comprenant :
un ou les deux parmi :
l'annulation des une ou plusieurs futures périodes (108, 110, 112, 114) d'accès au support programmées pour l'un desdits autres dispositifs de communication sans fil (102, 104, 106), et
la réduction d'une durée des une ou plusieurs futures périodes (108, 110, 112, 114) d'accès au support programmées pour ledit dispositif parmi lesdits autres dispositifs de communication sans fil (102, 104, 106), lorsque aucune communication depuis ledit dispositif parmi lesdits autres dispositifs de communication sans fil (102, 104, 106) n'a été reçue pendant une ou plusieurs périodes (108, 110, 112, 114) d'accès au support actuelles et/ou passées programmées pour ledit dispositif parmi lesdits autres dispositifs de communication sans fil (102, 104, 106).

10. Procédé selon la revendication 5, dans lequel lesdits un ou plusieurs autres dispositifs de communication comprennent au moins un point d'accès.

11. Procédé selon la revendication 7, comprenant :
la programmation d'une première période (108₁) d'accès au support pour l'un desdits autres dispositifs de communication sans fil (102, 104, 106) pendant ladite communication ; et
la programmation d'une période (108₂, 108₃) d'accès au support ultérieure pour ledit dispositif parmi lesdits autres dispositifs de communication sans fil (102, 104, 106) tout en communiquant avec ledit dispositif parmi lesdits autres dispositifs de communication sans fil (102, 104, 106) pendant ladite première période (108₁) d'accès au support.

12. Système comprenant:
un ou plusieurs circuits (120, 122, 124, 126) destinés à une utilisation dans un dispositif de communication sans fil (102, 104, 106), lesdits un ou plusieurs circuits (120, 122, 124, 126) fonctionnant de manière à :
configurer un récepteur dudit dispositif de communication sans fil (102, 104, 106) pour recevoir des communications dans un mode de fonctionnement à sensibilité élevée ;
communiquer avec un dispositif parmi un ou plusieurs autres dispositifs de communication sans fil (102, 104, 106) pour programmer un accès à un support qui est partagé par ledit dispositif de communication sans fil (102, 104, 106) et lesdits un ou plusieurs autres dispositifs de communication sans fil (102, 104, 106) pendant qu'ils se trouvent dans le mode de fonctionnement à sensibilité élevée ;
après qu'une ou plusieurs périodes (108, 110, 112, 114) d'accès au support sont partagées pour ledit dispositif de communication sans fil (102, 104, 106), configurer ledit récepteur dudit dispositif de communication sans fil (102, 104, 106) pour recevoir des communications dans un mode de fonctionnement à sensibilité faible, et transmettre des données sur ledit support lors de la réception depuis le dispositif parmi les un ou plusieurs autres dispositifs de communication sans fil (102, 104, 106), pendant l'une desdites une ou plusieurs périodes (108, 110, 112, 114) d'accès au support programmée pour ledit dispositif de communication sans fil (102, 104, 106), un message de réservation de support désignant ledit dispositif de communication sans fil (102, 104, 106).

13. Système selon la revendication 12, dans lequel lesdits un ou plusieurs circuits (120, 122, 124, 126) fonctionnent de manière à :
lorsque ledit dispositif de communication sans fil (102, 104, 106) a des données à transmettre, configurer une ou plusieurs parties dudit dispositif de communication sans fil (102, 104, 106) pour fonctionner dans un premier mode de fonctionnement pendant des périodes (108, 110, 112, 114) d'accès au support programmées pour ledit dispositif de communication sans fil (102, 104, 106) ; et
lorsque ledit dispositif de communication sans fil (102, 104, 106) n'a pas de données à transmettre, configurer lesdites une ou plusieurs parties dudit dispositif de communication sans fil (102, 104, 106) pour fonctionner dans un mode de fonctionnement d'économie d'énergie pendant lesdites périodes (108, 110, 112, 114) d'accès au support programmées pour ledit dispositif de communication sans fil (102, 104, 106).

14. Système selon la revendication 12, dans lequel :
après qu'une ou plusieurs périodes (108, 110, 112, 114) d'accès au support sont programmées pour ledit dispositif de communication sans fil (102, 104, 106), restreindre ledit dispositif de communication sans fil (102, 104, 106) de transmettre des données, ou réduire ou limiter des transmissions de données, sur ledit support jusqu'à ce que ledit message de réservation de support qui désigne ledit dispositif de communication sans fil (102, 104, 106) soit reçu par ledit dispositif de communication sans fil (102, 104, 106) pendant lesdites une ou plusieurs périodes d'accès au support programmées pour ledit dispositif de communication sans fil (102, 104, 106).

15. Système comprenant :
un ou plusieurs circuits (130, 132, 134, 136) destinés à une utilisation dans un dispositif de communication sans fil (102, 104, 106) adaptés pour :
configurer un récepteur dudit dispositif de communication sans fil (102, 104, 106) pour recevoir des communications dans un mode de fonctionnement à sensibilité élevée ;
communiquer avec un dispositif parmi un ou plusieurs autres dispositifs de communication sans fil (102, 104, 106) pour programmer un accès à un support qui est partagé par ledit dispositif de communication sans fil (102, 104, 106) et lesdits un ou plusieurs autres dispositifs de communication sans fil (102, 104, 106) pendant qu'ils se trouvent dans le mode de fonctionnement à sensibilité élevée ;
configurer ledit récepteur dudit dispositif de communication sans fil (102, 104, 106) pour recevoir des communications dans un mode de fonctionnement à sensibilité faible ultérieur à ladite programmation ;
disputer l'accès audit support à, ou juste avant, un début d'une période (108, 110, 112, 114) d'accès au support programmée pour ledit dispositif parmi les un ou plusieurs autres dispositifs de communication sans fil (102, 104, 106) ;
pendant ladite période (108, 110, 112, 114) d'accès au support, après avoir obtenu l'accès audit support, transmettre un message de réservation de support désignant ledit dispositif parmi les un ou plusieurs autres dispositifs de communication sans fil (102, 104, 106).
